# EUROPÄISCHE PATENTSCHRIFT

(11) **EP 0 389 858 B1**
(45) Veröffentlichungstag und Bekanntmachung des Hinweises auf die Patenterteilung: **14.07.1993**
(21) Anmeldenummer: 90104650.8
(22) Anmeldetag: 12.03.1990
(51) Int. Cl.: B65G 49/00, B65G 47/88, B67B 5/06, B67B 3/062

(54) **Anordnung zum Transportieren von in einer Reihe angeordneten Sektflaschendrahtbügeln**
Arrangement for transporting seriated wire straps for bottles of champagne
Arrangement pour transporter en file des muselets pour bouteilles de vins mousseux

(30) Priorität: 31.03.1989 DE 3910384
(43) Veröffentlichungstag der Anmeldung: 03.10.1990
(73) Patentinhaber: Draht- und Metallwarenfabrik Phillip Schneider GmbH & Co., 55583 Bad Münster (DE)
(72) Erfinder: Niebling, Heinz, Dipl.-Ing.(FH), D-6552 Bad Münster-Ebernburg (DE)
(74) Vertreter: Quermann, Helmut, Dipl.-Ing.

(56) Entgegenhaltungen:
- EP-A- 0 256 403
- EP-A- 0 319 642

## Beschreibung

Die Erfindung betrifft eine Anordnung zum Transportieren von in einer Reihe angeordneten Sektflaschendrahtbügeln.

Sektflaschendrahtbügel dienen dem Sichern von in Sektflaschen eingesteckten Sektkorken, sie sind in aller Regel als Bügelverschluß oder Vierdrahtverschluß ausgebildet. Üblicherweise werden die Sektflaschendrahtbügel in Automaten aus Blechbändern und/oder Drähten hergestellt, sie verlassen diese Herstellungsstation in ungeregeltem Zustand und erfahren erst anschließend eine geregelte Zusammenstellung, beispielsweise in Form einer Reihe.

Derartig gesammelte Sektflaschendrahtbügel werden so vom Hersteller in Behältnisse, insbesondere in Kartons, oder mittels tablettartiger Transporteinheiten, auf Paletten verpackt und an die Sekt produzierende Industrie vertrieben. Dort werden die Sektflaschendrahtbügel in aller Regel reihenweise aus den Behältnissen entnommen und eine Drahtbügelaufgabestation mit diesen beschickt, eine beispielsweise einer Verschließvorrichtung für die Flaschen zugeordnete Entnahmevorrichtung entnimmt einzeln die im Bereich der Drahtbügelentnahme station aufgestauten Drahtbügel und führt sie der Verschließvorrichtung zu, die in aller Regel mit der Füllvorrichtung für die Flaschen zusammenwirkt.

Eine derart arbeitende Vorrichtung ist beispielsweise aus der DE-OS 36 26 977 bekannt. In dieser ist eine an der Unterseite einen Elektromagneten aufweisende Greifeinrichtung beschrieben, die in eine Position oberhalb der in den Behältnissen angeordneten Sektflaschendrahtbügel verfahrbar und auf diese absenkbar ist und mit der bei Aktivierung des Elektromagneten jeweils eine Reihe von Sektflaschendrahtbügeln angehoben und zu einer parallel angeordneten Führungsbahn verfahren werden kann, die nach Ablage der Sektflaschendrahtbügel auf dieser aus der horizontalen Position in eine geneigte Stellung überführt wird, so daß die Reihe von Sektflaschendrahtbügeln zur Drahtbügelentnahmestation rutschen und damit die Entnahmevorrichtung einen Sektflaschendrahtbügel nach dem anderen der Verschließvorrichtung zuführen kann.

Bei der bekannten Vorrichtung ist zum Überführen der Sektflaschendrahtbügel eine räumliche Nähe zwischen der Drahtbügelaufgabestation und der Drahtbügelentnahmestation sowie der dieser zugeordneten Entnahmevorrichtung, die ihrerseits mit der Verschließvorrichtung zusammenwirkt, erforderlich. Es ist wegen der Übergabe der Sektflaschendrahtbügel mittels der Schräge praktisch nicht möglich, die Drahtbügelaufgabestation und die Drahtbügelentnahmestation weit beabstandet voneinander anzuordnen, geschweige denn die der Drahtbügelaufgabestation nachgeschaltete Drahtbügelentnahmestation oberhalb dieser.

Im übrigen besteht bei der bekannten Vorrichtung keine Möglichkeit, die aufgrund der Übergabe der Sektflascherdrahtbügel mittels der Schräge durch die Gesamtheit der auf der Schräge befindlichen Drahtbügel erzeugte Gewichtskraft in irgendeiner Art und Weise zu kompensieren, so daß die entsprechende Gewichtskomponente voll von der Drahtbügelentnahmestation aufgenommen werden muß, was das Ertnehmen der einzelnen Drahtbügel verkompliziert.

Es ist Aufgabe vorliegender Erfindung, eine Anordnung der genannten Art so weiter zu bilden, daß mit dieser Sektflaschendrahtbügel bei baulich einfacher Ausgestaltung der Anordnung über eine beliebig lange Transportstrecke, gegebenenfalls auch bei abfallender Transportrichtung gefördert werden können.

Die erfindungsgemäße Anordnung zum Transportieren der in einer Reihe angeordneten Sektflaschendrahtbügel ist gekennzeichnet durch ein antreibbares, umlaufendes Transportband zur Aufnahme der Sektflaschendrahtbügel, sowie zwei,den Sektflaschendrahtbügeln eines Bandabschnittes des Transportbandes zugeordnete, abwechselnd beauischlagbare Elektromagnete zum abwechselnden Einleiten von Kräften in die im Bereich des jeweiligen Elektromagneten befindlichen Sektflaschendrahtbügel, so daß die in Förderrichtung der Sektflaschendrahtbügel vorlaufenden Sektflaschendrahtbügel von den Kräften der nachlaufenden Sektflaschendrahtbügeln entlastet werden.

Zunächst ermöglicht es die Verwendung eines Transportbandes als Fördermittel die Sektflaschendrahtbügel über eine beliebig lange Strecke zu befördern. In Abhängigkeit von derFördergeschwindigkeit der Sektflaschendrahtbügel, die wegen einer gegebenenfalls taktweisen Entnahme der Sektflaschendrahtbügel im Bereich der Drahtbügelentnahmestation durchaus geringer sein kann als die Umlaufgeschwindigkeit des Transportbandes, können über dieses Kräfte in die Sektflaschendrahtbügel eingeleitet werden, die vor der Drahtbügelentnahmestation zu reduzieren sind. Die Verringerung der Kräfte erfolgt mittels der beiden, dem Transportband zugeordneten, abwechselnd beaufschlagbaren Elektromagnete. So wird immer nur ein Elektromagnet gleichzeitig aktiviert, bei einer Aktivierung des in Förderrichtung hinteren Elektromagneten werden die in dessen Bereich befindlichen Sektflaschendrahtbügel von diesem angezogen und es können infolge des umlaufenden Transportbandes die vor diesem aktivierten Elektromagneten befindlichen Sektflaschendrahtbügel weiter transportiert werden, es wird dann der in Förderrichtung vordere Elektromagnet aktiviert, der die geringfügig weiter transportierten Sektflaschendrahtbügel anzieht, so daß die bislang vom hinteren Elektromagneten angezogenen Sektflaschendrahtbügel um die entsprechende Förderlänge gegen die angezogenen Sektflaschendrahtbügel gefördert werden können, es erfolgt das erneute Aktivieren des in Förderrichtung hinteren Elektromagneten, usw. Die Aktivierung des jeweiligen Elektromagneten findet bevorzugt nur während einer minimalen Zeitdauer statt, so daß sichergestellt ist, daß bei einer Aktivierung des in Förderrichtung hinteren Elektromagneten die Sektflaschendrahtbügel nicht aus dem Bereich des vorderen Elektromagneten transportiert werden und ihren ineinandergesteckten Zustand aufgeben.

Das beschriebene Zusammenwirken von Transportband und diesem zugeordneten, abwechselnd beaufschlagbaren Elektromagneten eignet sich hervorragend, um die aufgrund eines Transportes der Sektflaschendrahtbügel von einem höheren Niveau auf ein tieferes Niveau auftretende Gewichtskraft aufzunehmen. In diesem Fall ist es nur erforderlich, die Elektromagnete nach dem Niveautransport im Auslauf oder gegebenenfalls sogar kurz vor dem Auslauf anzuordnen. Die Gewichtskraft der Sektflaschendrahtbügel kann dabei von den Elektromagneten allein aufgenommen werden, das heißt, es ist jeder Elektromagnet kräftemäßig so zu bemessen, daß er allein die durch die Sektflaschendrahtbügel bewirkte Gewichtskraft aufnehmen kann. Als besonders vorteilhaft wird es jedoch angesehen, wenn die dem Auslauf vorgelagerten Bereiche, insbesondere vertikal verlaufende Bandabschnitte, ein oder mehrere Permanentmagnete aufweisen, in die bereits ein Teil der Gewichtskraft der Sektflaschendrahtbügel eingeleitet werden kann.

Zweckmäßig weist das Transportband horizontal und vertikal verlaufende Bandabschnitte auf und es sind die Elektromagnete dem horizontalen Bandabschnitt zugeordnet. Bei einem Transport der Sektflaschendrahtbügel von einem oberen horizontalen Bandabschnitt über einen vertikal verlaufenden Bandabschnitt zu einem horizontalen unteren Bandabschnitt sind die Elektromagnete selbstverständlich dem unteren horizontalen Bandabschnitt zuzuordnen.

Die Elektromagnete können bezüglich des Transportbandes beliebig angeordnet sein, es ist nur sicherzustellen, daß über die Elektromagnete Kräfte sicher in die Sektflaschendrahtbügel eingeleitet werden können. So ist es prinzipiell denkbar, die Elektromagnete seitlich, über oder unter dem Transportband zu plazieren. Eine besondere Ausführungsform der Erfindung sieht jedoch vor, die Elektromagnete parallel beabstandet zu dem Bandabschnitt des Transportbandes anzuordnen, wobei der Abstand der Elektromagnete zu dem Bandabschnitt mindestens so groß, insbesondere geringfügig größer sein sollte, wie die Abmessungen der Sektflaschendrahtbügel zwischen den Elektromagneten und dem Bandabschnitt. Es ist hierdurch einerseits sichergestellt, daß die Sektflaschendrahtbügel komplikationslos in den Raum zwischen dem Transportband und den Elektromagneten eingeführt werden können, andererseits ist gewährleistet, daß die Sektflaschendrahtbügel ohne großen Energieaufwand gegen den jeweils aktivierten Elektromagneten gezogen werden können. In der aktivierten Position des entsprechenden Elektromagneten werden die diesem zugeordneten Sektflaschendrahtbügel vom Transportband abgehoben.

Bevorzugt stellt die Anordnung einen Teil einer Vorrichtung zum Überführen von Sektflaschendrahtbügeln von einer Drahtbügelaufgabestation zu einer Drahtbügelentnahmestation dar, wobei die Sektflaschendrahtbügel taktweise im Bereich der Drahtbügelaufgabestation auf das Transportband aufgesetzt und im Bereich der Drahtbügelentnahmestation vom Transportband taktweise entnommen werden, und die Geschwindigkeit des Transportbandes größer ist als die Fördergeschwindigkeit der Sektflaschendrahtbügel. Hierdurch wird trotz der taktweisen Aufgabe der Sektflaschendrahtbügel auf das Transportband bzw. deren taktweise Entnahme von diesem ein kontinuierlicher Förderverlauf geschaffen, wobei im vorbeschriebenen Sinne der lückenlose Transport der Sektflaschendrahtbügel von einem höheren Niveau auf ein tieferes Niveau möglich ist. Darüber hinaus ist auch ein Transport von einem niedrigeren auf ein höheres Niveau möglich, hierbei ist gegebenenfalls die zuvor beschriebene Gewichtskraft der Sektflaschendrahtbügel zu berücksichtigen; ein Transport auf ein höheres Niveau kann beispielsweise durch eine Hilfseinrichtung zum Aufbringen einer zusätzlichen magnetischen Förderkraft bewerkstelligt werden. In diesem Zusammenhang gesehen ist es selbstverständlich bekannt, Massengüter, wie beispielsweise Dosen, mittels eines Transportbandes zu fördern. Das Besondere der Weiterbildung der Erfindung ist aber im Unterschied hierzu darin zu sehen, daß es sich bei Sektflaschendrahtbügeln um Massengüter handelt, die ineinander gesteckt sind und taktweise aus der Drahtbügelaufgabestation ausgegeben werden und gleichfalls taktweise von der Drahtbügelentnahmestation manipuliert werden, bei gleichzeitiger kontinuierlicher Bewegung des Transportbandes. Um zu einem kontinuierlichen Produktionsfluß der Sektflaschen zu gelangen, muß daher die Geschwindigkeit des Transportbandes größer sein als die Fördergeschwindigkeit der Sektflaschendrahtbügel, die sich aufgrund deren Anstau im Bereich der Drahtbügelentnahmestation einstellt. Im Unterschied hierzu werden bei bekannten Verfahren zum Überführen von Massengütern diese mit der gleichen Geschwindigkeit bewegt wie das Transportband.

Das gemäß der Erfindung verwendete Transportband kann als umlaufendes Band ausgebildet sein, wobei unter dem Begriff Band sowohl ein einheitliches, durchgehendes Gebilde als auch eine Transportkette, insbesondere mit profilierter Gliedoberseite verstanden wird. Letztere findet insbesonsere dann Verwendung, wenn konkave Krümmungen zu überbrücken sind.

In den Figuren ist die Erfindung an einer Ausführungsform näher verdeutlicht, ohne auf diese beschränkt zu sein. Es zeigt:
- Figur 1: eine räumliche Ansicht eines Transportsystems zum Überführen von Sektflaschendrahtbügeln von einer Drahtbügelaufgabestation zu einer Drahtbügelentnahmestation, mit der erfindungsgemäßen Anordnung, in vereinfachter Darstellung,
- Figur 2: eine räumliche Ansicht eines Teiles des als Transportkette mit profilierter Gliedoberseite ausgebildeten Transportbandes, sowie dessen Lagerungs- und Führungselemente,
- Figur 3: einen Schnitt gemäß der Linie III-III in Figur 1,
- Figur 4: eine Ansicht IV gemäß Figur 1 des Transportsystems im konkaven nach oben gerichteten Förderbereich und

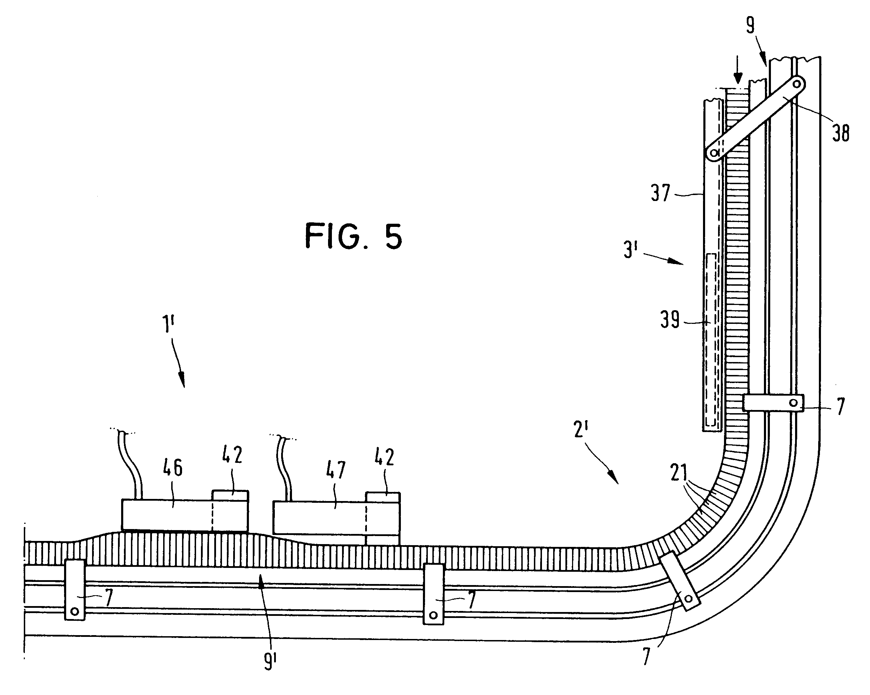

- Figur 5: eine Ansicht V gemäß Figur 1 des Transportsystems im konkaven nach unten gerichteten Förderbereich.

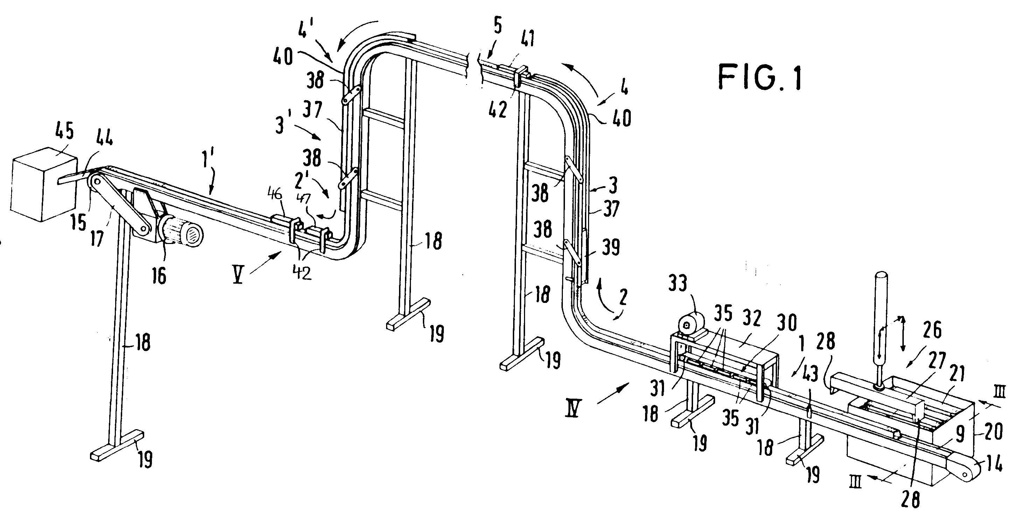

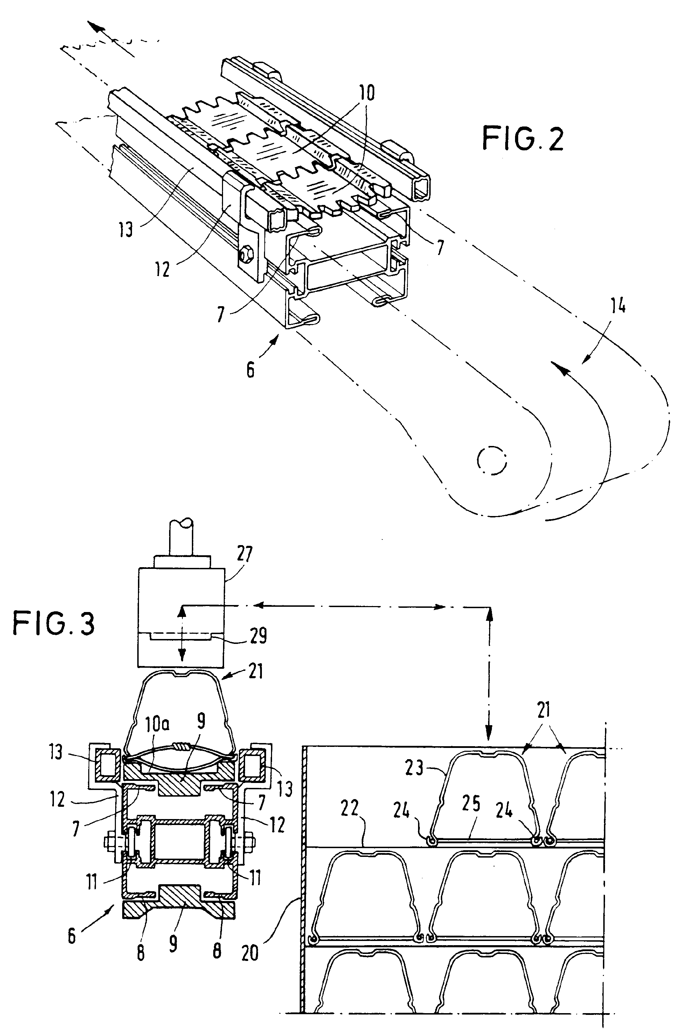

Das gezeigte Transportsystem dient zum Fördern von Sektflaschendrahtbügeln in Form von Bügelverschlüssen von einer unteren waagerechten Ebene über ein senkrechtes Mittelstück zu einer oberen waagerechten Ebene, von dort über ein senkrechtes Mittelsstück zu einer unteren waagerechten Ebene, wobei der Transport mittels einer umlaufenden Transportkette erfolgt. So zeigt Figur 1 einen ersten unteren, waagerechten Führungsabschnitt 1, einen sich an diesen anschließenden konkaven Führungsbogen 2, der in einen senkrechten, nach oben gerichteten Führungsabschnitt 3 mündet, an letzteren schließt sich ein konvexer Führungsbogen 4 an, der sich in einem oberen, waagerechten Führungsabschnitt 5 fortsetzt. An diesen schließt sich ein konvexer Führungsbogen 4' an, der in einen senkrecht nach unten gerichteten Führungsabschnitt 3' mündet. An letzteren schließt sich ein konkaver Führungsbogen 2' an, der in einen zweiten unteren, waagerechten Führungsabschnitt 1' mündet. Die Ausbildung der Führungsabschnitte bzw. der Führungsbogen ist der Darstellung der Figuren 2 und 3 näher zu entnehmen, die ein H-förmiges Führungsprofil 6 mit auf die waagerechte Position der Führungsabschnitte bezogen oberen und unteren Gleitansätzen 7 bzw. 8 für die umlaufende Transportkette 9 zeigen. Die Transportkette 9 als solche besteht aus einzelnen Kettensegmenten 10 mit im Bereich der Gliedoberseite eingelassenen, rechteckigen Querschnitt aufweisenden Vertiefungen, wobei die Verschlußdrähte 25 der Sektflaschendrahtbügel 21 in Anlage mit den Bodenbereichen 10a der Vertiefungen gelangen und somit die Sektflaschendrahtbügel 21 mit zur Vertikalen geringfügig geneigter Stellung der Bügel 23 transportiert werden. Die Kettensegmente 10 weisen auf deren Bewegungsrichtung bezogen an ihrem vorderen und hinteren Ende ein Sägezahnprofil auf, das mit dem entsprechenden Profil des jeweils benachbarten Kettensegmentes 10 in Eingriff gelangt. Durch die Ausbildung der Kettensegmente 10 können mittels des Transportbandes unkompliziert Kurven in einer Ebene oder Übergänge von der Waagerechten zur Vertikalen und umgekehrt gefahren werden. Beidseitig weist das H-förmige Führungsprofil 6 sich in dessen Längsrichtung erstreckende Führungsnuten 11 auf, in denen Haltestege 12 befestigt sind, die beidseitig der auf den oberen Gleitansätzen 7 aufliegenden Transportkette 9 Führungsschienen 13 halten. Das Führungsprofil 6 als solches mit den seitlichen Führungsschienen 13 und die Ausbildung der einzelnen Kettensegmente 10 ist, mit Ausnahme der speziell profilierten Gliedoberseite, bekannt.

Das Fördersystem besitzt am Anfang des unteren waagerechten Führungsabschnittes 1 eine Umlenkeinheit 14 für die Transportkette 9, desgleichen am Ende des unteren waagerechten Führungsabschnittes 1' eine Umlenkeinheit 15. Unterhalb des Führungsabschnittes 1' ist ein elektromotorischer Antrieb 16 mit diesem befestigt, der über eine Kette 17 eine in der Umlenkeinheit 15 angeordnete, nicht näher dargestellte Antriebswelle für die Transportkette 9 antreibt, wobei die Kettenlaufrichtung mit den in den konvexen und konkaven Abschnitten gezeigten Pfeilrichtungen übereinstimmt.

Das Transportsystem ist auf einem Traggestell gelagert, das aus einer Mehrzahl von Ständern 18 mit senkrecht zu diesen angeordneten Füßen 19 besteht.

Im Betrieb des Transportsystems läuft die Transportkette 9 mit gleichbleibender Geschwindigkeit um. Am Anfang des unteren waagerechten Führungsabschnittes 1 befindet sich seitlich neben diesem ein kistenförmiges Behältnis 20, beispielsweise ein Pappkarton, in dem mehrere Reihen von Bügelverschlüssen parallel zur Längserstreckung des Führungsabschnittes 1 nebeneinander auf einer Zwischenlage 22 angeordnet sind, die sich ihrerseits auf mehreren Lagen weiterer Bügelverschlüsse 21 mit dazwischen befindlichen Zwischenlagen 22 abstützt. Die Bügelverschlüsse 21 selbst weisen einen als Metallstreifen ausgebildeten Bügel 23 auf, der im Bereich seiner beiden Schenkelenden 24 mit Ösen versehen ist, die von Drahtringteilen 25 durchsetzt sind. Bei den im Behältnis 20 jeweils in einer Reihe angeordneten Bügelverschlüssen 21 sind die Bügel 23 im wesentlichen senkrecht orientiert und liegen dicht an dicht, während benachbarte Drahtringteile 25 der Bügelverschlüsse 21 im wesentlichen waagerecht orientiert, schuppenartig hintereinander zu liegen kommen.

Oberhalb des Behältnisses 20 ist eine Greifeinrichtung angeordnet, deren Greifarm 27 parallel zum unteren waagerechten Führungsabschnitt 1 ausgerichtet und in Richtung der in den Figuren 1 und 3 gezeigten Pfeile anheb- und absenkbar sowie seitlich zwischen dem Führungsabschnitt 1 und dem Behälter 20 hin- und herverfahrbar ist. Der Greifarm 27 wird an seinem vorderen und hinteren Ende 28 durch nach unten reichende keilförmige Ansätze 28 begrenzt, der lichte Abstand zwischen den Ansätzen 28 ist dabei so bemessen, daß zwischen diesen eine Reihe von Bügelverschlüssen 21 aufgenommen werden kann, wobei selbstverständlich die Längenerstreckung des Greifarmes 28 so bemessen ist, daß er in den Behälter 20 abgesenkt werden kann. An seiner Unterseite weist der Greifarm 27 einen Elektromagneten 29 auf. Zum Beschicken der Transportkette 9 mit Bügelverschlüssen 21 wird die Greifeinrichtung 26 mit dem Greifarm 27 über eine im Behälter 20 angeordnete Reihe von Bügelverschlüssen 21 verfahren und auf diese abgesenkt. Es wird dann der Elektromagnet 29 aktiviert, die Greifeinrichtung 26 angehoben, in eine Position oberhalb der Transportkette 9 verfahren und der Greifarm 27 mit den Bügelverschlüssen 21 so weit abgesenkt, bis diese auf der umlaufenden Transportkette 9 zu liegen kommen. Anschließend wird der Elektromagnet 29 reaktiviert und die Greifeinrichtung 26 wieder zum Behälter 20 verfahren, um diesem die nächste Reihe von Bügelverschlüssen 21 zu entnehmen, wobei an der Unterseite des Greifarmes 27 zusätzlich Saugnäpfe vorgesehen sein können, die nach dem Entfernen aller Bügelverschlüsse 21 von einer Zwischenlage 22 diese abheben und ablegen, bevor die auf der darunterliegenden Zwischenlage 22 befindlichen Reihen von Bügelverschlüssen 21 entnommen werden.

Auf die kontinuierliche umlaufende Transportkette 9 wird somit jeweils eine Reihe von Bügelverschlüssen 21 taktweise abgesetzt und von der Transportkette 9 abtransportiert. Aufgrund der relativ hohen Umlaufgeschwindigkeit der Transportkette 9 und der nachfolgend noch näher zu beschreibenden Widerstände, die von außen auf die auf der Transportkette 9 befindlichen Bügelverschlüsse 21 ausgeübt werden, stauen sich die Bügelverschlüsse 21 nach deren Ablage auf der Transportkette 9.

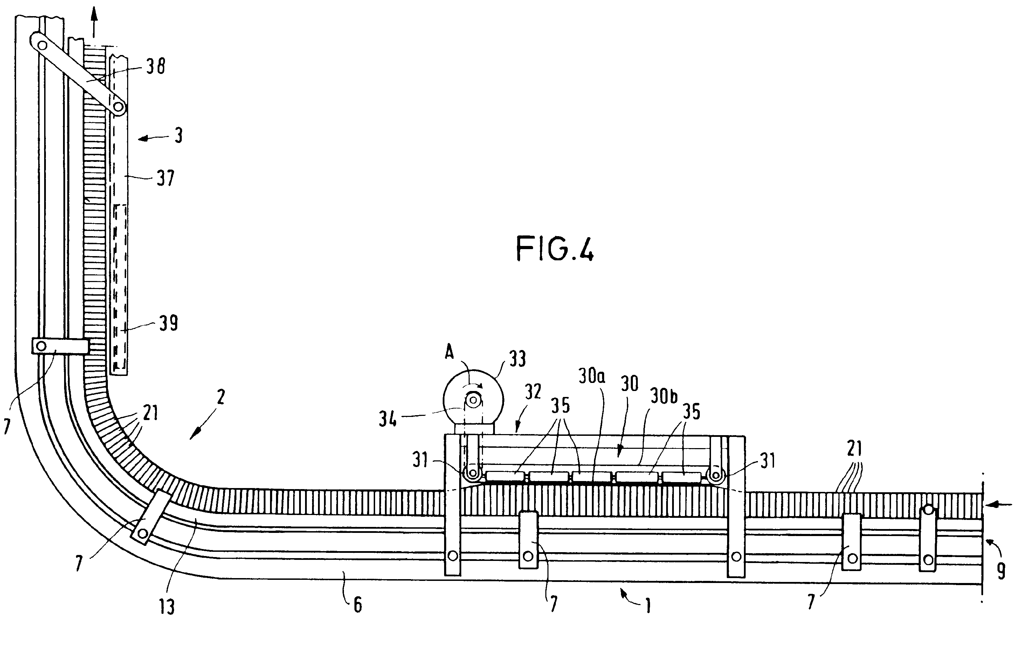

Kurz vor dem konkaven Führungsbogen 2 ist der Transportkette 9 des unteren waagerechten Führungsabschnittes 1 ein Transporthilfsband 30 zugeordnet. Dieses ist als in zwei Rollen 31 gelagertes,umlaufendes Band ausgebildet, mit parallel zum waagerechten Abschnitt der Transportkette 9 verlaufenden Bandabschnitten 30a und 30b. Die Rollen 31 sind in einem mit dem Führungsabschnitt 1 verbundenen Gestell 32 gelagert, die den konkaven Führungsbogen 2 zugewandte Rolle 31 ist darüber hinaus mittels eines auf dem Gestell 32 gelagerten Elektromotors 33 über einen Riemen 34 im Uhrzeigersinn gemäß Pfeilrichtung A in Figur 4 antreibbar. Bei angetriebenem Transporthilfsband 30 ist die Laufrichtung der Transportkette 9 und des dieser zugewandten Bandabschnittes 30a des Transporthilfsbandes 30 gleichgerichtet, der Abstand des Bandabschnittes 30b von der Transportkette 9 ist dabei geringfügig größer wie die vertikalen Abmessungen der Bügelverschlüsse 21 zwischen der Transportkette 9 und dem Bandabschnitt 30b. Zwischen den beiden Bandabschnitten 30a und 30b sind mehrere sich über die gesamte Länge zwischen den beiden Rollen 31 erstreckende Permanentmagnete 35 vorgesehen, die plattenförmig ausgebildet sind und an dem Bandabschnitt 30a anliegen, somit an der den Bügelverschlüssen 21 abgewandten Seite dieses Bandabschnittes 30a. Die Permanentmagnete 35 sind im Gestell 32 befestigt.

Das Transporthilfsband 30 wird über den Elektromotor 33 so angetrieben, daß dessen Umlaufgeschwindigkeit der Umlaufgeschwindigkeit der Transportkette 9 entspricht. Sobald die Bügelverschlüsse 21 in den Bereich des Transporthilfsbandes 30 gelangen, werden sie aufgrund der auf sie einwirkenden Magnetkraft der Permanentmagnete 35 oben gegen den Bandabschnitt 30a gezogen und haften an diesem. In diesem Stadium sind die Bügelverschlüsse 21 geringfügig von der Transportkette 9 abgehoben, was jedoch in der Darstellung der Figur 4 übertrieben dargestellt ist. Grundsätzlich ist anzustreben, daß der Abstand zwischen der Transportkette 9 und dem Bandabschnitt 30a des Transporthilfsbandes 30 so gewählt ist, daß die Bügelverschlüsse 21 ohne zu verkanten durch den zwischen der Transportkette 9 und dem Bandabschnitt 30a gebildeten Raum hindurchgeführt werden können, aber dennoch so gering ist, daß die Permanentmagnete 35 und damit auch der Bandabschnitt 30a in möglichst geringem Abstand von der oberen Begrenzung der Bügelverschlüsse 21 angeordnet sind. Aufgrund der geschilderten Ausbildung des Transporthilfsbandes 30 mit den Permanentmagneten 35 ergibt sich ein Kraftschluß zwischen dem Abschnitt 30a des Transporthilfsbandes bzw. den Permanentmagneten 35 und den Bügelverschlüssen 21 über die Gesamtlänge des Bandabschnittes 30a. Über diese Länge können somit Vorschubkräfte im Sinne der Transportrichtung der Transportkette 9 auf die weiter vorne angeordneten Bügelverschlüsse 21 ausgeübt werden, was ausreicht, um diese auf das höhere Niveau zu transportieren. Nach Passieren der dem konkaven Führungsbogen 2 zugeordneten Rolle 31 gelangen die Bügelverschlüsse 21 ausser Eingriff mit den Permanentmagneten 35, womit die davor befindliche Reihe von Bügelverschlüssen 21 wieder in Anlage mit der Transportkette 9 gelangt.

Der sich an den konkaven Führungsbogen 2 anschließende senkrechte Abschnitt 3 ist, wie insbesondere den Figuren 1 und 4 zu entnehmen ist, mit einer senkrechten Abdeckung 37 versehen, die gleichfalls über einen Bügel 38 im Führungsprofil 6 gelagert ist, der Abstand zwischen der durch den Bügel 38 fixierten Abdeckung 27 und der Transportkette 9 ist so bemessen, daß die Bügelverschlüsse 21 möglichst reibungsfrei vertikal zwischen den Teilen gefördert werden können. Zusätzlich ist die senkrechte Abdeckung 37 an ihrem unteren Ende mit mehreren Permanentmagnetstäben 29 versehen, die sicherstellen, daß die im vertikalen Bereich befindlichen Bügelverschlüsse 21 nicht mit ihrem vollen Gewicht auf die im konkaven Führungsbogen 2 befindlichen Bügelverschlüsse 21 einwirken. In diesem Zusammenhang ist es selbstverständlich, daß die über das Transporthilfsband 30 in die Bügelverschlüsse 21 eingebrachten Kräfte größer sein müssen wie die Gewichtskräfte der Bügelverschlüsse 21 im vertikalen Abschnitt und gegebenenfalls auch der Einfluß der Permanentmagnetstäbe 39 zu berücksichtigen ist.

Der sich an den senkrechten Führungsabschnitt 3 anschließende konvexe Führungsbogen 4 ist mit einer entsprechenden konvex ausgebildeten Abdeckschiene 40 versehen. Im Anschluß an die konvexe Kurve schließt sich im oberen waagerechten Führungsabschnitt 5 der Förderkette 9 ein Elektromagnet 41 an, der in geringfügigem Abstand von der oberen Begrenzung der Bügelverschlüsse 21 in einem Bügel 42 gehalten ist, der seinerseits mit dem Führungsprofil 6 verbunden ist. Der Elektromagnet 41 wird von einem Sensor 43 angesteuert, der vor dem in der unteren Ebene befindlichen Transporthilfsband 30 angeordnet ist, der Sensor 43 und der im oberen Bereich angeordnete Elektromagnet 41 dienen dem Zweck, den konkaven und konvexen Führungsbogen 2 bzw. 4 sowie den senkrechten Führungsabschnitt 3 stets lückenlos mit Bügelverschlüssen 21 belegt zu halten. So führt eine Unterbrechung der Zufuhr von Bügelverschlüssen 21 mittels der Greifeinrichtung 26 dazu, daß der Sensor 43 aktiviert wird, der seinerseits den Elektromagneten 41 beaufschlagt, die Kraft des Elektromagneten 41 ist dabei so bemessen, daß bei dessen Aktivierung kein Vorschub der Bügelverschlüsse 21 mittels des in der unteren Ebene befindlichen Transporthilfsbandes 30 möglich ist.

An den waagerechten Führungsabschnitt 5 schließt sich der entsprechend dem Führungsbogen 4 ausgebildete konvexe Führungsbogen 4' an, der mit einer entsprechend konvex ausgebildeten Abdeckschiene 40 versehen ist. Der sich an den Führungsbogen 4' anschließende senkrechte Führungsabschnitt 3' ist entsprechend dem Führungsabschnitt 3 ausgebildet und gleichfalls mit einer senkrechten Abdeckung 37 versehen, die an ihrem unteren Ende mehrere Permanentmagnetstäbe 39 aufweist, die einen Teil der Gewichtskraft der in dem senkrechten Führungsabschnitt 3' befindlichen Bügelverschlüsse 21 aufnimmt, so daß der sich an den senkrechten Führungsabschnitt 3' anschließende konkave Führungsbogen 2' , der entsprechend dem Führungsbogen 2 ausgebildet ist, teilweise vom Gewicht der Bügelverschlüsse 21 entlastet ist. An den konkaven Führungsbogen 2' schließt sich der entsprechend dem Führungsabschnitt 1 ausgebildete waagerechte Führungsabschnitt 1' an, der eingangs mit zwei in Bügeln 42 gehaltenen Elektromagneten 46 und 47 versehen ist, die abwechselnd (taktweise) beaufschlagbar sind. Die Elektromagnete 46 und 47 sind dabei parallel beabstandet zu dem Bandabschnitt 9' des Transportbandes 9 angeordnet, der Abstand der Elektromagnete 46 bzw. 47 zum Transportband 9 ist geringfügig größer als die Abmessungen der Bügelverschlüsse 21 zwischen den Elektromagneten 46 bzw. 47 und dem Bandabschnitt 9'. Die Elektromagnete 46 und 47 bewirken eine weitere Gewichtsaufnahme der im Führungsabschnitt 3' angestauten Bügelverschlüsse 21 und ermöglichen durch die abwechselnde Beaufschlagung und damit den taktweisen Kraftschluß des jeweiligen Elektromagneten 46 bzw. 47 mit den von diesem angezogenen Bügelverschlüssen 21 einen definierten Transport der Bügelverschlüsse 21 mittels des Transportbandes 9. Die Elektromagnete 46 bzw. 47 sind zweckmäßig so geschaltet, daß bei einer Aktivierung des im oberen Niveau angeordneten Elektromagneten 41 infolge fehlenden Nachschubs an Bügelverschlüssen 21 beide Elektromagnete 46 und 47 aktiviert werden, um so zu verhindern, daß Bügelverschlüsse 21 durch das Transportband 9 an diesen vorbei transportiert werden und der senkrechte Führungsabschnitt 3' in diesem Fall entleert wird.

Schließlich ist im Bereich der Umlenkeinheit 15 eine Rutsche 44 mit U-förmigem Querschnitt angedeutet, auf die die Bügelverschlüsse 21 in Reihe verbracht werden, so daß sie in eine in Figur 1 als Black-Box gezeigte Entnahmestation 45 gelangen, in der in bekannter Art und Weise mittels einer Zangenabteilung jeweils der erste Bügelverschluß von dem nachfolgenden separiert und einer Verschließvorrichtung zugeführt wird.

Die zuvor geschilderte Erfindung ist nicht auf den Transport von Sektflaschendrahtbügeln in Form von Bügelverschlüssen beschränkt. Es besteht genauso die Möglichkeit, anders gestaltete Sektflaschendrahtbügel, beispielsweise Vierdrahtverschlüsse zu transportieren, bei diesen ist jedoch davon auszugehen, daß die einzelnen Verschlüsse ineinandergesteckt liegend auf der Transportkette 9 befördert werden, das heißt es wären in diesem Fall die Drahtringteile 25 im wesentlichen senkrecht orientiert. Die Erfindung ist darüber hinaus nicht auf das Fördern von Sektflaschendrahtbügeln von einer oberen in eine untere Ebene beschränkt, sie kann gleichwohl in vereinfachter Ausbildung Anwendung finden für einen Transport in einer Ebene.

## Patentansprüche

1. Anordnung zum Transportieren von in einer Reihe angeordneten Sektflaschendrahtbügeln, **gekennzeichnet** durch ein antreibbares, umlaufendes Transportband (9) zur Aufnahme der Sektflaschendrahtbügel (21), sowie zwei den Sektflaschendrahtbügeln (21) eines Bandabschnittes (9') des Transportbandes (9) zugeordnete, abwechselnd beaufschlagbare Elektromagnete (46, 47) zum abwechselnden Einleiten von Kräften in die im Bereich des jeweiligen Elektromagneten (46; 47) befindlichen Sektflaschendrahtbügel (21), so daß die in Förderrichtung der Sektflaschendrahtbügel (21) vorlaufenden Sektflaschendrahtbügel (21) von den Kräften der nachlaufenden Sektflaschendrahtbügel (21) entlastet werden.

2. Anordnung nach Anspruch 1, **dadurch gekennzeichnet**, daß das Transportband (9) horizontal und vertikal verlaufende Bandabschnitte (1, 5, 1'; 3, 3') aufweist und die Elektromagnete (46, 47) dem unteren horizontalen Bandabschnitt (1') zugeordnet sind.

3. Anordnung nach Anspruch 1 oder 2, **dadurch gekennzeichnet**, daß die Elektromagnete (46, 47) parallel beabstandet zu dem Bandabschnitt (9') des Transportbandes (9) angeordnet sind, wobei der Abstand der Elektromagnete (46, 47) zu dem Bandabschnitt (9') mindestens so groß ist wie die Abmessungen der Sektflaschendrahtbügel (21) zwischen den Elektromagneten (46, 47) und dem Bandabschnitt (9').

4. Anordnung nach Anspruch 3, **dadurch gekennzeichnet**, daß der Abstand der Elektromagneten (46, 47) zu dem Bandabschnitt (9') geringfügig größer ist als die Abmessungen der Sektflaschendrahtbügel (21) zwischen den Elektromagneten (46, 47) und dem Bandabschnitt (9').

5. Anordnung nach einem der Ansprüche 2 bis 4, **dadurch gekennzeichnet**, daß dem vertikal verlaufenden Bandabschnitt (3') ein oder mehrere Permanentmagnete (39) zugeordnet sind.

6. Anordnung nach einem der Ansprüche 1 bis 5, **dadurch gekennzeichnet**, daß das Transportband (9) kontinuierlich angetrieben wird.

7. Anordnung nach einem der Ansprüche 1 bis 6, **gekennzeichnet** durch eine Hilfseinrichtung (30, 35) zum Aufbringen einer zusätzlichen Förderkraft auf in einem Bandbereich (1) des Transportbandes (9) angeordnete Sektflaschendrahtbügeln (21).

8. Anordnung nach einem der Ansprüche 1 bis 7, **dadurch gekennzeichnet**, daß die Anordnung Teil einer Vorrichtung zum Überführen von Sektflaschendrahtbügeln (21) von einer Drahtbügelaufgabestation (26) zu einer Drahtbügelentnahmestation (45) darstellt, wobei die Sektflaschendrahtbügel (21) taktweise im Bereich der Drahtbügelaufgabestation (26) auf das Transportband (9) aufgesetzt und im Bereich der Drahtbügelentnahmestation (45) taktweise entnommen werden, und die Geschwindigkeit des Transportbandes (9) größer ist als die Fördergeschwindigkeit der Sektflaschendrahtbügel (21), bedingt durch einen Anstau der Sektflaschendrahtbügel (21), verursacht durch in den Bewegungsweg der Sektflaschendrahtbügel (21) eingebrachte Widerstände.

## Claims

1. An arrangement for conveying sparkling wine bottle wire clips arranged in a row, characterised by a circulating conveyor belt (9), which can be driven, for receiving the sparkling wine bottle wire clips (21), and two electromagnets (46, 47), which can be actuated alternately and which are associated with the sparkling wine bottle wire clips (21) of a belt section (9') of the conveyor belt (9), for the alternate introduction of forces into the sparkling wine bottle wire clips (21) situated in the region of the respective electromagnets (46; 47), so that the sparkling wine bottle wire clips (21) travelling in front in the direction of conveying of the sparkling wine bottle wire clips (21) are disengaged from the forces of the sparkling wine bottle wire clips (21) travelling behind.

2. An arrangement according to claim 1, characterised in that the conveyor belt (9) has belt sections (1, 5, 1', 3, 3') running horizontally and vertically, and the electromagnets (46, 47) are associated with the lower horizontal belt section (1').

3. An arrangement according to claim 1 or 2, characterised in that the electromagnets (46, 47) are disposed parallel to and at a distance from the belt section (9') of the conveyor belt (9), wherein the distance from the electromagnets (46, 47) to the belt section (9') is at least as great as the dimensions of the sparkling wine bottle wire clips (21) between the electromagnets (46, 47) and the belt section (9').

4. An arrangement according to claim 3, characterised in that the distance from the electromagnets (46, 47) to the belt section (9') is slightly greater than the dimensions of the sparkling wine bottle wire clips (21) between the electromagnets (46, 47) and the belt section (9').

5. An arrangement according to any one of claims 2 to 4, characterised in that one or more permanent magnets (39) are associated with the belt section (3') which runs vertically.

6. An arrangement according to any one of claims 1 to 5, characterised in that the conveyor belt (9) is continuously driven.

7. An arrangement according to any one of claims 1 to 6, characterised by an auxiliary device (30, 35) for applying an additional conveying force to sparkling wine bottle wire clips (21) disposed in a belt region (1) of the conveyor belt (9).

8. An arrangement according to any one of claims 1 to 7, characterised in that the arrangement constitutes part of a device for transferring sparkling wine bottle wire clips (21) from a wire clip output station (26) to a wire clip receiving station (45), wherein the sparkling wine bottle wire clips (21) are periodically placed on the conveyor belt (9) in the region of the wire clip output station (26) and are periodically taken up in the region of the wire clip receiving station (45), and that the speed of the conveyor belt (9) is greater than the conveying speed of the sparkling wine bottle wire clips (21) determined by an accumulation of the sparkling wine bottle wire clips caused by resistances placed in the path of movement of the sparkling wine bottle wire clips (21).

## Revendications

1. Dispositif pour transporter en file des muselets pour bouteilles de vin mousseux, caractérisé en ce qu'il comporte une bande transporteuse (9), équipée d'un dispositif d'entraînement en carrousel, recevant les muselets (21), deux électro-aimants (46, 47) associés aux muselets (21) d'une section (9') de la bande transporteuse et pouvant être actionnés alternativement de manière à induire alternativement des forces dans les muselets (21) situés dans chaque électro-aimant (46 ; 47), de manière que, dans la direction d'avancement des muselets (21), ceux situés en avant se trouvent libérés de l'action des forces exercées par les muselets suivants.

2. Dispositif selon la revendication 1, caractérisé en ce que la bande transporteuse (9) présente des sections horizontales et verticales (1, 5, 1' ; 3, 3'), les électro-aimants (46, 47) étant associés à la section horizontale inférieure (1').

3. Dispositif selon la revendication 1 ou 2, caractérisé en ce que les électro-aimants (46, 47) sont disposés parallèlement à la section (9') de la bande transporteuse (9) et à une distance des électro-aimants (46, 47) par rapport à la section (9') au moins égale aux dimensions des muselets (21) situés entre les électro-aimants (46, 47) et la section de bande (9').

4. Dispositif selon la revendication 3, caractérisé en ce que la distance séparant les électroaimants (46, 47) de la section de bande (9') est légèrement supérieure aux dimensions des muselets (21) situés entre les électro-aimants (46, 47) et la section de bande (9').

5. Dispositif selon la revendication 3, caractéristique en ce qu'un ou plusieurs aimants permanents (39) sont associés à la section verticale (3') de la bande transporteuse pendant la marche.

6. Dispositif selon l'une des revendications 1 à 5, caractérisé en ce que la bande transporteuse (9) est entraînée en continu.

7. Dispositif selon l'une des revendications 1 à 6, caractérisé en ce qu'il comporte un dispositif auxiliaire (30, 35) exerçant une force supplémentaire d'avancement sur les muselets situés dans une zone (1) de la bande transporteuse (9).

8. Dispositif selon l'une des revendications 1 à 7, caractérisé en ce qu'il constitue une partie d'un dispositif faisant passer des muselets (21) d'une station d'alimentation (26) à une station de reprise (45), les muselets (21) étant, dans la zone de la station d'alimentation, déposés en cadence sur la bande transporteuse (9) pour être retirés en cadence dans la zone de la station de reprise (45), la vitesse de la bande transporteuse (9) étant supérieure à la vitesse d'avancement des muselets (21), sous réserve d'une accumulation des muselets (21), provoquée par des résistances introduites sur le parcours de ces muselets.
